# EUROPÄISCHE PATENTSCHRIFT

(11) **EP 4 347 250 B1**
(45) Veröffentlichungstag und Bekanntmachung des Hinweises auf die Patenterteilung: **21.01.2026**
(21) Anmeldenummer: 22732460.5
(22) Anmeldetag: 31.05.2022
(51) Int. Cl.: B32B 7/12, B32B 29/00, B32B 27/10, B32B 27/08, B32B 27/32, B32B 27/36, B32B 27/30, B32B 27/34

(54) **RECYCLINGFÄHIGES PAPIER-VERPACKUNGSLAMINAT MIT DÜNNER BARRIEREFOLIE UND GUTER AUFREISSEIGENSCHAFT**
RECYCLABLE PAPER PACKAGING LAMINATE WITH THIN BARRIER FILM AND GOOD TEAR PROPERTIES
STRATIFIÉ D'EMBALLAGE EN PAPIER RECYCLABLE AVEC FILM BARRIÈRE FIN ET BONNE PROPRIÉTÉ DE DÉCHIREMENT

(30) Priorität: 02.06.2021 AT 504512021
(43) Veröffentlichungstag der Anmeldung: 10.04.2024
(73) Patentinhaber: Constantia Pirk GmbH & Co. KG, 92712 Pirk (DE)
(72) Erfinder: EGER, Frank, 80799 München (DE); FISCHER, Andreas, 92702 Kohlberg (DE); GEITNER, Werner, 92637 Weiden (DE); STEIN, Tobias, 92637 Weiden (DE); GREFENSTEIN, Achim, 67122 Altrip (DE); SCHECK, Matthias, 92727 Waldthurn (DE)
(74) Vertreter: Patentanwälte Pinter & Weiss OG
(86) Internationale Anmeldenummer: PCT/EP2022/064681
(87) Internationale Veröffentlichungsnummer: WO 2022/253793

(56) Entgegenhaltungen:
- EP-A1- 2 758 239
- EP-A1- 3 398 768
- EP-A1- 3 517 291
- EP-A1- 3 517 291
- EP-B1- 2 758 239
- AT-B1- 522 884
- AT-B1- 522 884

## Beschreibung

Die gegenständliche Erfindung betrifft ein Verpackungslaminat bestehend aus einer Trägerschicht und einer Barrierefolie, wobei die Trägerschicht aus Papier mit einer Grammatur von 40 bis 120 g/m² besteht, wobei eine Barrierefolie über eine Verbindungsschicht mit der Trägerschicht verbunden ist, wobei eine in zumindest eine Reckrichtung gereckte Kunststofffolie als Barrierefolie vorgesehen ist.

Verpackungslaminate aus Kunststoff sind heutzutage für eine Vielzahl von Verpackungen in unterschiedlichen Bereichen vorgesehen. Nichtsdestotrotz verursachen die lange Umweltbeständigkeit der meisten Materialien fundamentale Umweltprobleme. Diese Tatsache ist einerseits den gesetzgebenden Organen, als auch dem Konsumenten bewusst. Gesetzgeberisch gibt es einige Initiativen auf nationaler und supranationaler Ebene. In Österreich ist hierbei die Novelle zum Abfallwirtschaftsgesetzt mit Gültigkeit vom 1.1.2020 bespielhaft zu nennen. Hierbei wurden sogenannte "Plastiksackerl" aus dem Bereich des Handels verbannt.

Durch das verstärkte Umweltbewusstsein ist jedoch auch der Durchschnittskonsument abgeneigt Verpackungsmaterialien, welche ausschließlich aus nicht recyclefähigen Materialien hergestellt sind, zu erwerben. Dementsprechend gibt es einen Trend zur Produktion von alternativen Verpackungsmaterialien, wie beispielsweise auf Basis von Biokunststoffen wie Polyhydroxybutyral oder auch Polylactide. Ebenfalls werden papierbasierte Verpackungen, beispielsweise für Essenslieferungen, Chips oder auch für Verschlussplatinen von verschiedensten Verpackungen, immer beliebter.

Generell müssen alle Verpackungen einen gewissen Mindeststandard erfüllen, um die Frische und Haltbarkeit der verpackten Güter zu gewährleisten. Bei den meisten klassischen Kunststoffen, aber auch bei metallischen Verpackungen, beispielsweise Getränkekapseln aus Aluminium, waren die Barriereeigenschaften meistens aufgrund der Undurchlässigkeit der Materialien für Aroma, Gas und Flüssigkeiten gegeben. Neue umweltfreundliche Materialien haben meist schlechtere Barriereeigenschaften und müssen daher oftmals modifiziert oder beschichtet werden, um den für Verpackungsmaterialien geforderten Barriereeigenschaften zu genügen.

Als Kennwerte für die Barriereeigenschaften werden oftmals spezifische Transferraten für charakteristische Stoffe angegeben. Dabei sind vor allem die Sauerstofftransferrate (oxygen transfer rate - OTR) aufgrund der Oxidation von Lebensmittel relevant, als auch die Wasserdampftransferrate (water vapour transfer rate - WVTR) mit Augenmerk auf mikrobieller Kontamination. Ebenfalls wichtig sind oftmals Fetttransferraten und auch die Aromabarriereeigenschaften.

Daher ist es das prinzipielle Ziel umweltverträgliche Verpackungsmaterialien bereitzustellen, welche die nötigen Barriereeigenschaften erfüllen und vorzugsweise auch noch recyclingfähig sind.

Eine mögliche Methode zur Bewertung zum Recyclen von papierhaltigen Verpackungslaminaten ist die sogenannte Methode PTS-RH 021/97. Ein besonderes Augenmerk ist hier auf das Zerfaserungsverhalten und die Sticky-Bildung zu legen. Unter Sticky-Bildung versteht der Fachmann die Ablagerung von klebenden Störstoffen, während des Recyclens. Durch Heißsiegellacke, Kleber, etc. können sich bei der Papierherstellung klebende Bestandteile bei der Blattbildung und anschließender Trocknung bilden und sind unerwünscht. Zur Bestimmung des Zerfaserungsverhaltens wird die papierhaltige Verpackung mittels eines Labor-Pulpers zerfasert. Nach diesem Zerfaserungsprozess wird das Material fraktioniert. Hierbei können vereinzelte Fasern und Füllstoffe durch eine Schlitz- oder Lochplatte fraktioniert werden. Das zurückbleibende "coarsereject", beispielsweise Kunststoffteile und ähnliches, wird als papierfremder Bestandteil gewertet, welcher nicht recycelbar ist. Ist dieser Anteil unter 20 % spricht man von einem rezyklierbaren, papierhaltigen Verpackungslaminat.

EP 1 083 043 B1 offenbart ein Verpackungslaminat für Speiseeisverpackungen, wie beispielsweise Tüten in Kegelform, mit einer Schicht aus Polypropylen (PP), Polyethylen (PE) oder Polyamid (PA) mit Schichtdicken von 6-25 µm und Pergament-, Pergamin- oder Pergamentersatz-Papier mit Flächengewichten von 60-110 g/m². Speziell für diese Verpackungen ist, dass sie fett und feuchtigkeitsabweisend sein müssen. Auf die Recycelfähigkeit wird in der Offenbarung nicht eingegangen.

EP 3 784 486 A1 offenbart ein Verpackungslaminat aus einem Pergamin/PET mit Schichtdicken des PET von 5-70 µm, verwendet mit zusätzlichen speziellen Barriereschichten oder Siegelschichten für eine Platine. Es wird auf Metall- bzw. Metalloxidschichten verzichtet, um die biologische Abbaubarkeit zu verbessern.

JP 6635355 B2 offenbart ein Verpackungslaminat aus Polyolefinen teilweise aus nichtfossiler Herkunft und Papier als Trägerschicht. Die Polyolefinschicht wird auf das Papier direkt extrudiert. Das Laminat hat eine Dicke von 10-100 µm in Summe. Dadurch, dass das Polyolefin auf das Papier extrudiert wird, ist eine nachträgliche Trennung kaum möglich. Dadurch ist das Material nicht recycelbar. AT 522 884 B1 offenbart eine recyclebare Papierverpackung mit hoher Barriere gegen Wasserdampf und Sauerstoff.

Diese Verpackungslaminate haben im Regelfall das Problem, dass die Durchreißeigenschaften von der Kunststofffolie dominiert werden, und dadurch ein Weiterreißen der Verpackung nicht gut möglich ist bzw. die Kunststofffolie bzw. - beschichtung so stark gedehnt werden kann, dass unerwünschte Kunststoffpartikel das Nahrungsmittel kontaminieren können. Es kann auch Probleme beim Auspacken von Verpackungsgut mit Papier als Trägermaterial verursachen, da die Kunststofffolie ein Weiterreißen aufgrund ihrer hohen Bruchdehnung verhindert. Weiters ist es dann für den Konsumenten direkt ersichtlich, dass Kunststoff in einer Verpackung vorhanden ist.

Die gegenständliche Erfindung hat die Aufgabe ein Verpackungslaminat bereitzustellen, welches ausreichende Barriereeigenschaften besitzt und das Durchreißverhalten von Papier aufweist, aber dennoch recyclingfähig ist.

Das wird erfindungsgemäß dadurch erreicht, dass eine unüblich dünne, in zumindest einer Reckrichtung gereckte Kunststofffolie als Barrierefolie vorgesehen ist, wobei die Barrierefolie eine Schichtdicke von 1 bis 10 µm, bevorzugt kleiner 5 µm und höchst bevorzugt kleiner 3 µm aufweist, und wobei die Bruchdehnung der Barrierefolie in Reckrichtung kleiner oder gleich 180 % und bevorzugt kleiner oder gleich 130% beträgt.

Im Rahmen der gegenständlichen Erfindung ist es demnach möglich, die Barrierefolie in eine erste Reckrichtung zu recken. Ebenso ist es möglich, die Barrierefolie in eine zweite Reckrichtung zu recken. Die Barrierefolie kann ausschließlich in eine erste Reckrichtung oder ausschließlich in eine zweite Reckrichtung gereckt werden. Die Barrierefolie kann aber ebenso in eine erste Reckrichtung und in eine zweite Reckrichtung gereckt werden. Eine Reckung in sowohl eine erste als auch in eine zweite Reckrichtung wird üblicherweise als biaxiale oder bidirektionale Reckung bezeichnet. Ist die Barrierefolie in zwei Reckrichtungen gereckt, dann ist die Bruchdehnung der Barrierefolie vorteilhafterweise in beiden Reckrichtungen kleiner oder gleich 180 %, bevorzugt kleiner oder gleich 130%.

Durch die hohe Steifigkeit und geringe Bruchdehnung der Barrierefolie nimmt das gesamte Verpackungslaminat überraschenderweise die Weiterreißeigenschaften des Papiers an. Das ist vorteilhaft für das Auspacken bzw. Entpacken des Füllguts und ermöglicht es Papierverpackungen mit hohen Barriereeigenschaften für den Konsument zur Verfügung zu stellen. Dennoch beeinflusst der Kunststoff nicht das Weiterreißverhalten des Verpackungslaminat. Bevorzugt merkt auch der Konsument durch die papierähnlichen Reißeigenschaften nicht, dass ein geringer Anteil Kunststoff in der Verpackung vorhanden ist.

Das erfindungsgemäße Verpackungslaminat besteht aus einer Trägerschicht aus Papier und einer Barrierefolie, welche aus einer Kunststofffolie aus Thermoplasten, wie z.B. Polyolefinen oder Polyestern besteht. Die Trägerschicht besteht aus Papier jeglicher Ausführung und ist aus Material aufgebaut, welches aus Cellulose, Hemicellulose und/oder ligninhaltigem Material besteht, mit der Ausnahme von Pergamin. Obwohl sowohl Pergamin, als auch Papier, aus Cellulose gewonnen werden, unterscheidet sich Pergamin strukturell grundlegend von Papier, da sich die jeweils bei der Herstellung von Pergamin und Papier angewandten Faserstoffmahlarten unterscheiden. Papier kann beispielsweise aus Zellstoff, Holzstoffe oder Altpapierstoff oder auch landwirtschaftlichen Abfällen wie Silphie, Gras, Stroh, und ähnlichem hergestellt werden. Die Trägerschicht weist eine Grammatur von 40 - 120 g/m² auf.

In einer vorteilhaften Ausführungsform besteht die Trägerschicht aus ungestrichenem Papier. Zu ungestrichenem Papier werden alle holzfreien oder holzhaltigen gezählt, die ohne synthetische Inhaltsstoffe hergestellt werden. Ihre Oberfläche lässt meist feine Fasern erkennen, ist etwas rauer und offenporig sind. Bevorzugterweise wird ungestrichenes Papier in einer Grammatur zwischen 40 und 120 g/m² verwendet.

Vorteilhafte Thermoplaste können beispielsweise Polyolefine, wie Polyethylen (PE) in verschiedenen Typen wie PE hoher Dichte (HDPE) oder mit geringer Dichte (LDPE), Polypropylen (PP) als Homopolymer, Polybutylen (PB), Polyisobutylen (PIB) und ähnliche sein, welche im Bereich der Verpackungslaminate vom Fachmann als geeignet erachtet werden.

Bevorzugterweise können für erfindungsgemäßes Verpackungslaminat auch andere Thermoplaste, wie Polyester, insbesondere Polyethylenterephthalat (PET) eingesetzt werden.

PP Homopolymer kann mittels verschiedener Verfahren hergestellt werden und unterschiedliche Orientierungen der Kettenreste aufweisen. Als vorteilhaft für solche Verpackungslaminate kann oPP verwendet werden, welches über Polymerisation mittels Ziegler-Natta Katalysatoren hergestellt wird.

Die Bruchdehnung der Kunststoffe wird über einen Zugversuch bestimmt. Der Zugversuch wird der Norm ASTM D882-12 unterworfen. Dabei wird die Bruchdehnung in %, und gegebenenfalls auch die Zugfestigkeit in N/mm², der Barrierefolie gemessen. Der Zugversuch wird dabei folgendermaßen durchgeführt: Die vorbereitete Probe der Barrierefolie (100 x 15mm) wird an der Zugmaschine bis zum Bruch mit einer Zugkraft belastet. Die Probe wird dabei so in das Zugmessgerät eingespannt, dass die Längsachse der Probe mit der Wirklinie der Zugkraft zusammenfällt. Die Nullpunktstellung der Zugkraft und des Weges ist vor dem Start des Zugversuchs zu überprüfen und sicherzustellen. Die erforderliche Dehnungsgeschwindigkeit wird auf 50 mm/min eingestellt. Die Probendehnung wird über den Wegmessbereich des Zugmessgerätes abgenommen. Für die Verwendung in einem erfindungsgemäßen Verpackungsmaterial 1 soll die Barrierefolie im angestrebten Dickenbereich von 1 bis 10 µm eine Bruchdehnung von kleiner/gleich 180% und bevorzugt kleiner/gleich 130% aufweisen.

Bevorzugterweise kann die Barrierefolie optisch transparent oder teiltransparent sein. Unter transparent versteht man, dass das Material im sichtbaren Bereich des elektromagnetischen Spektrums keine oder kaum Absorption aufweist. Das kann beispielsweise über eine Kunststofffolie erfolgen, welche teilweise transparentes PP, wie gegossenes (cast) PP, axial orientiertes PP, amorphes oder kristallines PP enthält. Auch ataktisches und isotaktisches PP ist denkbar. PET kann ebenfalls amorph verarbeitet werden und liegt somit als transparentes Material vor, wie es bei Getränkeflaschen bekannt ist. Auch die Schichtdicke der Kunststofffolie kann die Transparenz beeinflussen. Damit wird ermöglicht, dass das Verpackungslaminat die Farbe des Papiers annimmt. Weiters kann es vorteilhaft für verschiedenste Drucke auf der Trägerschicht oder der Barrierefolie sein.

Um die erfindungsgemäße Bruchdehnung zu erzeugen wird die Barrierefolie in zumindest eine Richtung gereckt. Unter Recken versteht man das Verformen der Kunststofffolie in eine Richtung, wie das Längsverformen in Maschinenrichtung (MD, "Machine Direction") oder das normal auf die Maschinenrichtung (Transversalrichtung TD, "Transversal Direction") Verformen, beides über die elastische Streckgrenze hinaus. Die Maschinenrichtung kann dabei einer ersten Reckrichtung und die Transversalrichtung einer zweiten Reckrichtung entsprechen. Dadurch ordnen sich die Kunststofffasern in Richtung der Längsverformung und erhalten dadurch, unter anderem, die gewünschten Bruchdehnungseigenschaften Es ist auch vorstellbar, dass die Barrierefolie biaxial, also in beide Richtungen, gereckt ist. Das kann vorteilhaft sein, wenn die Barrierefolie eine gewünschte Anisotropie erhalten soll, um beispielsweise in eine bevorzugte Richtung reißbarer zu sein.

Optische Transparenz kann auch vorteilhaft sein, um den Konsumentenwunsch nach nachhaltiger Verpackung nachzukommen. Papier wird im generellen Bewusstsein als natürlich oder nachhaltig empfunden, während Kunststoff oftmals als umweltschädlich eingestuft wird. Eine dünne Kunststofffolie wie in der erfindungsgemäßen Barrierefolie kann es ermöglichen, dass die Haptik des Papiers erhalten bleibt und bietet noch eine weitere Anzahl an Vorteilen, wie eine erhöhte Durchstoßfestigkeit und verbesserte Barriereeigenschaften verglichen mit reinen Papierverpackungen. Die Reißeigenschaften, wie die Durchreißfestigkeit, sollten erfindungsgemäß möglichst nahe an denen von reinen Papierverpackungen sein, damit die Haptik des Verbundlaminats und das Verhalten beim Aufreißen der von reinen Papierverpackungen entspricht.

Das Polymer in der Barrierefolie kann selbst schon gute Barriereeigenschaften gegen Sauerstoff, Wasserdampf, Fett, Kohlendioxid, aromatische und gesättigte Mineralölkomponenten und Aroma enthalten. Polymerfolien wirken wie Diffusionsmembranen, speziell für apolare Stoffe und können nach dem Lösungs-Diffusionsmodell für einzelne Stoffklassen beschrieben werden. Je nach Stoffklasse kann daher die Barrierewirkung unterschiedlich sein. Um Barrierewirkung für gut durch die Kunststofffolie durchlässige Stoffe zu gewährleisten, kann eine zusätzliche Barriereschicht auf die Barrierefolie aufgebracht sein. Bevorzugterweise können Barriereschichten aus Metallen oder Halbmetallen oder Oxiden bestehen. Metalle können in dünnen Schichten beispielsweise über Sputtern, sogenannte Kathodenzerstäubung aufgebracht werden. Dabei wird eine Spannung zwischen einer Metallkathode und einem Anodenring angelegt und ein Plasma gezündet, welche Metallatome von der Kathode abträgt und diese setzen sich auf einem Substrat ab.

Auch denkbar sind physikalische oder chemische Dampfbeschichtung. Physikalische Dampfbeschichtung ist ähnlich zum Sputtern, aber kann beispielsweise auch über Lichtbögen und Laser prozessiert werden. Bei chemischer Dampfbeschichtung können Precursor eingesetzt werden, welche in der Kammer reagieren und eine dünne Schicht bilden. AlOₓ und SiOₓ können beispielsweise als reine Metalle aufgebracht werden und bilden danach eine Oxidschicht oder können chemisch mittels passender Precusor aufgebracht werden.

Es sind aber auch Barriereschichten aus Kunststoffen denkbar. Bevorzugterweise werden Polyamid (PA) oder Ethylen-Vinylalkohol-Copolymer (EVOH) verwendet. Diese können als Lackbeschichtung aufgetragen werden. Es ist aber auch denkbar und meist ökonomischer, dass die Kunststofffolie mit der Barriereschicht gemeinsam co-extrudiert wird. Vorzugsweise kommt das bekannte Blasfolien- oder Flachfolienextrusionsverfahren zum Einsatz.

Die Barriereschicht kann auch zusätzlich mit einem Schutzlack überzogen werden, vor allem als Schutz gegen Microcracking, was die Barrierefunktion beeinträchtigen kann. Mit einer solchen Barriereschicht kann auch eine niedrige OTR und eine niedrige WVTR erreicht werden. Zusätzlich kann auch die Trägerschicht mit einer Barriereschicht versehen sein, eine Trägerbarrierebeschichtung. Verschiedene Barriereschichten können vorteilhaft sein, um einen gewünschten Wert einer spezifischen Transferrate zu erreichen. Je nach Barriereschicht ist die Dicke unterschiedlich und kann zwischen 0,01 und 1 µm sein.

Beide Bestandteile, also Trägerschicht und Barrierefolie können so ausgestaltet sein, dass sie leicht voneinander getrennt werden können. Das kann wichtig sein während eines Recycling-Pulpprozesses, damit die Barrierefolie abgetrennt und einem separaten Recycling zugeführt wird. Die Trägerschicht aus Papier kann dann nach einer Aufarbeitung wieder als Altpapier verwendet werden.

Die Barrierefolie ist mit der Trägerschicht mittels einer Verbindungsschicht verbunden. Die Verbindungsschicht ist bevorzugterweise ein feucht aufgetragener Kaschierkleber.

Kaschierkleber bezeichnen Klebstoffe, welche mittels Walze feucht auf eine Schicht aufgebracht werden und welche eine ausreichende Verbundhaftung zwischen zwei Schichten in einem Verpackungslaminat gewährleisten. Ein Kaschierkleber kann hydrophil sein und dadurch bewirken, dass sich bei Feuchtigkeits- oder Wasserkontakt die Bindungen des Klebers, beispielsweise Wasserstoffbrückenbindungen, schwächen und sich die Schichten trennen. Ebenfalls kann es auch möglich sein, dass der Kaschierkleber selbst wasserlöslich ist, wie beispielsweise stärke- oder proteinbasierter Kaschierklebstoff. Solch ein Kaschierklebstoff kann im Recyclingprozess vorteilhaft sein, weil sich die Polymerbestandteile der Barrierefolie vom Papier einfach lösen lassen. Ein solcher Kaschierkleber kann bevorzugterweise ein Auftragsgewicht im getrockneten Zustand von 0,5 bis 5 g/m² haben. Ein Kaschierkleber kann aber auch hydrophob sein und eine starke Verbundhaftung in feuchter Umgebung gewährleisten.

Die Schichtdicke der Verpackungslaminats kann im Bereich von 40 bis 130 g/m² oder ca. 40 bis 130 µm sein, die Barrierefolie kann bevorzugt in einem Bereich von 1 - 10 µm und bevorzugterweise in einem Bereich von -kleiner 5 µm verwendet werden, höchst bevorzugt in einem Bereich von kleiner 3 µm.

Beim Recyceln des Verpackungslaminats wird dieses, üblicherweise nach einer mechanischen Zerkleinerung, in Wasser bei einer bestimmten Wassertemperatur und für eine bestimmte Zeit eingeweicht (Pulpprozess). Aufgrund der Eigenschaften des erfindungsgemäßen Verpackungslaminats kann sich die Trägerschicht während des Pulpprozesses beim Recycling von der Barrierefolie, samt aller Schichten und potentiellen Störstoffe für das Papierrecycling, ablösen. Eine hydrophile oder wasserlösliche Verbindungsschicht reagiert beim Pulpprozess mit dem Wasser und verliert dabei die Hafteigenschaften oder löst sich gänzlich in Wasser auf, sodass die Trägerschicht von der Barrierefolie getrennt wird. Die Trägerschicht kann sich damit im Wasser auflösen und eine Pulpe bilden, aus der wiederum Recyclingpapier hergestellt werden kann. Für das Recyceln des Verpackungslaminats ist es vorteilhaft, wenn die Trägerschicht bei einer Wassertemperatur von 40°C innerhalb von maximal 20 Minuten, vorzugsweise maximal 10 Minuten, insbesondere vorzugsweise maximal 5 Minuten, die Haftung ausreichend verliert oder sich auflöst, sodass sich die Trägerschicht und die Barrierefolie leicht trennen.

Da die Barriereschicht (sofern vorgesehen) nach der Abtrennung während des Pulpprozesses im Papierrecycling auf der abgelösten Barrierefolie verbleiben kann, kommt es nicht zu einer Vergrauung des recycelten Papiers, was bei einer vor allem bei Barrieremetallisierung einer Papieroberfläche zwangsweise passieren würde.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 ein erfindungsgemäßes Verpackungslaminat mit Barrierefolie,
Fig.2 eine vorteilhafte Ausführungsform des Verpackungslaminat mit Barriereschicht,
Fig.3 eine Verpackung mit erfindungsgemäßem Verpackungslaminat,
Fig.4 eine Beutelverpackung mit erfindungsgemäßem Verpackungslaminat,
Fig.5a das Spannungs-Dehnungs-Diagramm von erfindungsgemäßen Verpackungslaminat,
Fig.5b das Spannungs-Dehnungs-Diagramm von einem Verpackungslaminat im Stand der Technik,
Fig.6a die Rissbilder von erfindungsgemäßen Verpackungslaminat, und
Fig.6b die Rissbilder von einem Verpackungslaminat im Stand der Technik.

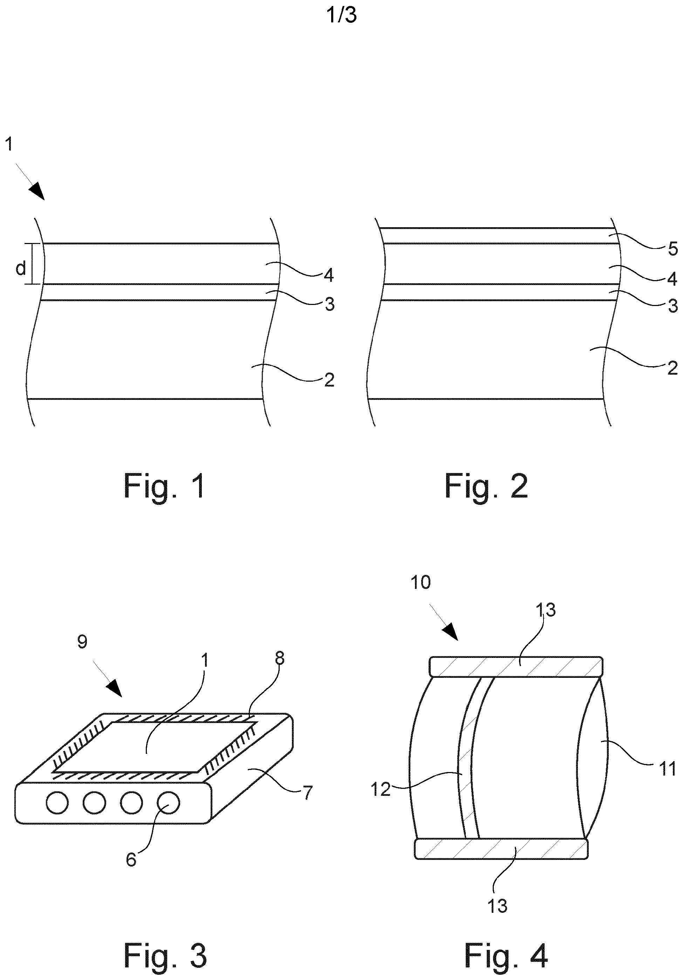

Fig. 1 zeigt ein erfindungsgemäßes Verpackungslaminat 1. Das Verpackungslaminat 1 besteht grundsätzlich aus einer Trägerschicht 2 und einer Barrierefolie 4. Die Barrierefolie 4 ist eine Kunststofffolie und es kann zusätzlich eine Barriereschicht 5 aufgebracht sein. Die Trägerschicht 2 ist mittels einer Verbindungsschicht 3 mit der Barrierefolie 4 verbunden.

Die Trägerschicht 2 ist aus Papier gefertigt. Unter Papier wird jegliche Ausführung von Material verstanden, welches aus Cellulose, Hemicellulose oder ligninhaltigem Material besteht, mit der Ausnahme von Pergamin. Pergamin wird zwar aus Cellulose gefertigt, unterscheidet sich aber strukturell grundlegend von Papier, weil sich die jeweils bei der Herstellung von Pergamin und Papier angewandten Faserstoffmahlarten unterscheiden. Papier kann beispielsweise aus Zellstoff, Holzstoff oder Altpapierstoff (oder auch Mischungen davon), hergestellt werden. Das verwendete Papier kann ein Papier für den Lebensmittelkontakt und gestrichen oder ungestrichen sein. Bevorzugterweise ist das Papier beidseitig unbehandelt und ohne Fremdanteile versehen, und damit ein sogenanntes ungestrichenes oder Naturpapier, das heißt beispielsweise ohne Schichten aus Polymeren wie bei handelsüblichem gestrichenem Papier. Das Papier der Trägerschicht 2 kann aber auch eine Beschichtung, üblicherweise aus einem Polymer, aufweisen. Die Trägerschicht 2 kann beispielsweise selbst ausreichende Barriereeigenschaften gegen Wasserdampf und Sauerstoff aufweisen.

Es kann die Trägerschicht 2 zusätzlich auch mit einer Trägerbarrierebeschichtung versehen sein. Die Trägerbarrierebeschichtung kann dabei mindestens ein Polymer umfassen, welches ausgewählt ist aus einer Gruppe, die mindestens einen Polyvinylalkohol, welcher bevorzugt als ein Homo- oder Co-Polymer vorliegt, PVDC, Biopolymere, Polyester, Casein, Stärke, thermoplastische Stärke, Zucker, Zellulose, Carboxymethylzellulose, Zelluloseether, Xanthan, Carrageen, Polypeptide, Proteine, Gelatine, Pectin, Guaran, Chitinderivate, Chitosanderivate (insbesondere N-Carboxymethylchitosan), Dextran, Gluten, Hyaluronsäure, Polyhydroxyalkanoatbasiertes wasserlösliches Polymer, Ionomere, Polyurethan ein Ethylen-Vinyllaurat-Alkohol-Copolymer, ein oder mehrere Copolymere eines Polyesters und aliphatischen Epoxiden, ein oder mehrere Copolymere eines (Alkylierten/Arylierten) Acrylats und aliphatischen Epoxiden, ein oder mehrere Homo- oder Co-Polymere des Polyvinylpyrolidon, ein oder mehrere Cycloolefin- Copolymere (COC), insbesondere bevorzugt auf Basis Norbornen-Polymeren (COP) und bevorzugt auf Basis Norbornen-Ethylen-Copolymeren (COC), (teilweise oder vollständig hydriert), Polyamiden, Cellulosederivate, ein oder mehrere lösliche Polycarbonat-Copolymere einzeln oder in einer Kombination mehrerer der in der Gruppe enthaltenen Polymere und bevorzugt eine Vernetzungskomponente aus der Gruppe der Isocyanate, Amine, Anhydride, Oxazoline, Azeridine reaktive Silane, Di-carbonsäuren.

In dem Fall, dass die Trägerschicht 2 eine Trägerbarrierebeschichtung aufweist, kann die Trägerbarrierebeschichtung auf der der Verbindungsschicht 3 zugewandten Seite der Trägerschicht 2 vorgesehen sein. Die Trägerbarrierebeschichtung kann aber auch auf der der Verbindungsschicht 3 abgewandten Seite der Trägerschicht 2 vorgesehen sein. Ebenso ist es möglich, sowohl auf der der Verbindungsschicht 3 zugewandten Seite der Trägerschicht 2, als auch auf der der Verbindungsschicht 3 abgewandten Seite der Trägerschicht 2 eine Trägerbarrierebeschichtung vorzusehen.

Die Trägerschicht 2 hat erfindungsgemäß eine Grammatur von 40 bis 120 g/m² und ist damit, wie in Fig.1 angedeutet, wesentlich dicker als die Barrierefolie 4. Das Verpackungslaminat 1 ist daher asymmetrisch ausgestaltet.

Die Barrierefolie 4 kann ein thermoplastischer Kunststoff sein, insbesondere Polyolefine oder Polyester. In einer bevorzugten Ausführungsform besteht die Barrierefolie aus Polyproplylen (PP) in Form eines Homopolymers, hochdichtem Polyethylen (HDPE), Ethylen-Vinylalkohol-Copolymer (EVOH), oder Polyester, wie z.B. Polyethylenterephthalat (PET). Die Barrierefolie 4 ist in zumindest eine Richtung gereckt. Bevorzugterweise kann die Barrierefolie 4 auch biaxial gereckt werden, um vergleichbare Bruchdehnungseigenschaften in beiden Folienrichtungen zu erzeugen. Unter Recken versteht man das Längsverformen in Maschinenrichtung (MD), und beim bidirektionalen Recken auch in Querrichtung (TD) normal auf die Maschinenrichtung, über die elastische Streckgrenze hinaus. Dadurch ordnen sich die Kunststofffasern in Richtung der Längsverformung und erhalten dadurch, unter anderem, die gewünschten Bruchdehnungseigenschaften. Bevorzugterweise wird mit einem Reckverhältnis in MD von 1:2 bis 1:10 und in TD von 1:2 bis 1:10 gereckt.

Durch das Recken kann man auch erhöhte Barriereeigenschaften der Barrierefolie 4, gegenüber einer ungereckten Kunststofffolie, erzielen. Aber auch andere Eigenschaften einer Kunststofffolie, beispielsweise die optische Transparenz lassen sich durch das Recken beeinflussen.

Die Trägerschicht 2 und die in eine Richtung gereckte Barrierefolie 4 sind über eine Verbindungsschicht 3 verbunden. Die Verbindungsschicht 3 kann bevorzugterweise ein Kaschierkleber sein. Kaschierkleber können beispielsweise hydrophil sein und die Bindung bei Kontakt mit Feuchtigkeit verlieren, was das Recyceln des Verpackungslaminats 1 verbessern oder erleichtern kann. Geeignete polare Verbindungsschichten 3 bestehen vorzugsweise aus Polymeren mit erhöhter Polarität, beispielsweise auf Basis von Maleinsäureanhydrid gepfropften Polyolefinen (wie PE oder PP), Ethylen-Vinylacetat-Copolymer (EVA), Ethylen/Acrylsäure-Copolymer (EAA), Ethylen Butylacrylat-Copolymer (EBA), oder ähnliche Polyolefincopolymeren, oder auch Polyurethan. Auch kompostierbare und wasserlösliche Materialen wie stärke - oder proteinbasierte Kleber sind denkbar. Die Verbindungsschicht 3 hat bevorzugterweise ein Auftragsgewicht im getrockneten Zustand von 5 - 0,5 g/m², höchst bevorzugt unter 2,5 g/m².

In einer bevorzugten Ausführungsform kann auf die Barrierefolie 4 eine Barriereschicht 5 aufgebracht sein. Die Barriereschicht 5 kann bevorzugterweise aus einer Schicht aus einem (Halb)Metall oder (Halb)Metalloxid bestehen. In einer bevorzugten Ausführungsform besteht Barriereschicht 5 aus AlOₓ, SiOₓ oder einer Metallisierung, vorzugsweise mit Aluminium. Die Barriereschicht 5 kann über chemische oder physikalische Dampfabscheidung (CVD oder PVD) aufgebracht werden, oder bevorzugt bei Metallen über Kathodenzerstäubung. In diesem Fall wird die Barriereschicht 5 nach dem Recken auf die Barrierefolie 4 aufgebracht.

In einer weiteren möglichen Ausgestaltung ist die Barriereschicht 5 eine Schicht aus einem Barrierepolymer, also einem Polymer mit einer ausreichenden Barriereeigenschaft. Das Barrierepolymer ist vorzugsweise ein Polyamid (PA) oder ein Ethylen-Vinylalkohol-Copolymer (EVOH). Bevorzugt wird EVOH als Barrierepolymer verwendet. Eine solche Barriereschicht 5 kann beispielsweise mit der Barrierefolie 4 co-extrudiert, extrusionskaschiert oder kaschiert werden. Beim Extrusionskaschieren oder Kaschieren ist ein geeigneter Kaschierkleber zum Verbinden der Barriereschicht 5 und der Barrierefolie 4 vorgesehen.

Zusätzlich kann auf die Barriereschicht 5 ein Schutzlack aufgebracht werden, der auch die Barriereeigenschaften zusätzlich verbessern kann. In einer bevorzugten Ausführungsform besteht das Verpackungslaminat 1 aus Trägerschicht 2, Barrierefolie 4, Barriereschicht 5 und Schutzlackschicht (wobei allfällige Verbindungsschichten nicht erwähnt sind).

Die Barriereschicht 5 kann, je nach Ausführung und Material, Barriereeigenschaften gegen Wasserdampf, Sauerstoff, aromatische und gesättigte Mineralölkomponenten, Fett, Kohlendioxid und/oder Aroma erhöhen.

Die Barriereeigenschaften werden bevorzugt in spezifischen Transferraten angegeben. Unbeschichtete Kunststofffolien haben typische Bereiche für die OTR von 40-60 cm³/(m² * d * bar) (wobei "d" für Tag steht) und typische Bereiche für die WVTR von 260-500 cm³/(m² * d * bar). Eine Barriereschicht 5, wie beispielsweise eine Metallisierung, kann diese Eigenschaften wesentlich verbessern. Für Sauerstoff kann dann eine bevorzugte OTR kleiner als 5 cm³/(m² * d * bar) (wobei "d" für Tag steht), höchst bevorzugt kleiner als 1,5 cm³/(m² * d * bar) erreichbar sein. Für Wasserdampftransferrate WVTR kann ein Wert von 5 cm³/(m² * d * bar) bevorzugt, und höchst bevorzugt Werte kleiner als 1 cm³/(m² * d * bar) für hochqualitative Produkte erreicht werden. Für aromatische und gesättigte Mineralölkomponenten kleiner 12 g / (m² x d) gemessen bei 23°C und 50% relative Luftfeuchtigkeit (r. h). Für die Fettdichtigkeit wurde ein KIT-Wert von 12 ermittelt, welcher nach Tappi 559 ("Grease resistance test for paper and paperboard, Test Method T 559 cm-12") gemessen wurde. Der KIT-Wert ist in eine Skala von 1-12 aufgeteilt, wobei 12 die höchste Barrierewirkung darstellt. Für die Aromabarriere gibt es kein objektives Maß, sondern die Wirkung als Aromabarriere wird subjektiv durch Geruchsprüfungen festgestellt.

Die Barriereeigenschaften können auch erst durch eine Kombination von Trägerschicht 2, Barrierefolie 4 und Barriereschicht 5 erfüllt werden. Beispielsweise kann die Trägerschicht 2 die nötige Sauerstoff- und Wasserdampfbarriere gewährleisten, während die Barrierefolie 4 die nötigen Barriereeigenschaften für Fett, Mineralölkomponenten und Aroma erfüllt.

Erfindungsgemäß hat die Barrierefolie 4 eine Schichtdicke d von 1 bis 10 µm, vorzugsweise 5 - 1 µm. Bei Verwendung von Polyolefinen in der Barrierefolie 4 höchst bevorzugt kleiner 3 µm und bei Verwendung von PET höchst bevorzugt kleiner 5 µm.

Eine Barriereschicht 5 der Barrierefolie 4 kann, wie in Fig. 2 gezeigt, der Verbindungsschicht 3 zugewandt angeordnet sein. Es ist aber auch denkbar, dass die Barriereschicht 5 der Verbindungsschicht 3 abgewandt angeordnet ist, also bei Verwendung in einer Verpackung außenliegend. Eine Barriereschicht 5 in einer Verpackung in Richtung Füllgut 6 kann sich auch für Füllgut, welches beispielsweise die Trägerschicht 2 angreifen würde, wie säurehaltige Lebensmittel, besonders gut eignen.

Eine Verbundhaftung zwischen Barrierefolie 4 und Trägerschicht 2 sollte je nach Anwendung ausreichend hoch sein, um Delamination des Verpackungslaminats 1 zu vermeiden. Die Verbundhaftung wird mit einem Schälversuch ermittelt. Bei einem Schälversuch wird ein Teststreifen des Verpackungslaminats 1 an freien Enden der Trägerschicht 2 und der Barrierefolie 4 auseinandergezogen. Die freien Enden werden dabei in einer Zugmaschine eingespannt und in einem vorgegebenen Abzugswinkel (z.B. 90°) auseinandergezogen und dabei die Kraft gemessen. Bei einer Breite des Teststreifens von 15 mm erhält man die Angabe der Verbundhaftung in N/15 mm. Der Höhe der gemessenen Kraft ist für eine ausreichende Verbundhaftung mindestens größer als 0,5 N/15mm, vorzugsweise bis zu 3 N/15mm. Bei sehr guter Verbundhaftung kann es auch zu einem Papierfaserriss oder zu einer Spaltung in der Kunststofffolie bzw. der Barriereschicht 5 kommen. Die Angabe der Verbundhaftung ist hierbei der nahezu konstante Schälwert (Peelwert) und nicht der maximale Anreißwert, der am Beginn des Schälversuches als Kraftspitze auftritt. In der Regel werden zur Ermittlung der Verbundhaftung auch eine Anzahl von Schälversuchen durchgeführt und die gesuchte Verbundhaftung als Mittelwert aus den einzelnen Messungen ermittelt. Der Schälversuch wird beispielsweise nach der Norm ASTM F904 durchgeführt.

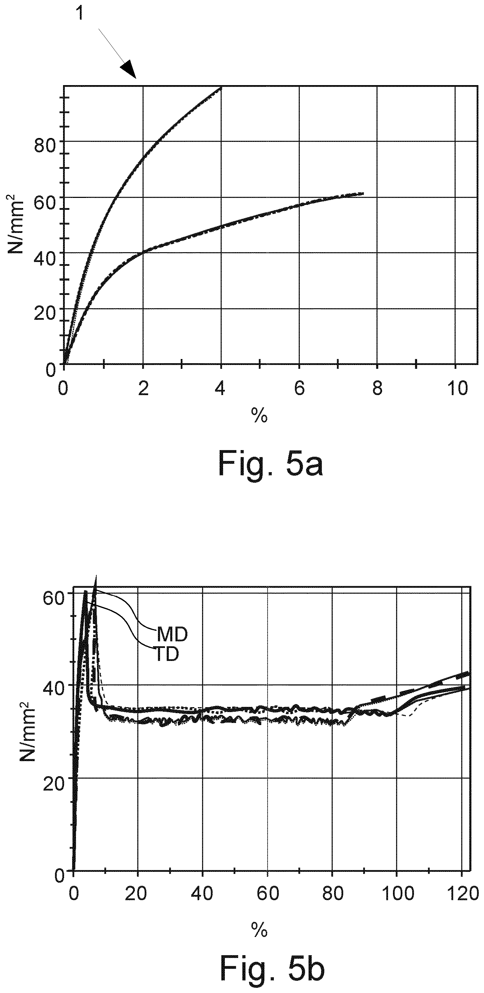

Erfindungsgemäß sind die Reißeigenschaften des Verpackungslaminats 1 ähnlich zur Reißeigenschaften von reinen Papierverpackungen, aber durch die Barrierefolie 4 können hohe Barriereeigenschaften ermöglicht werden, verglichen mit einer reiner Papierverpackung. Die sogenannte Durchreißfestigkeit des Verpackungslaminats 1 wird über die Bruchdehnung, bestimmt und über das verwendete Material der Barrierefolie 4 und der Schichtdicke der Barrierefolie 4, gegebenenfalls inklusive Barrierschicht 5, beeinflusst. Um die erfindungsgemäße Durchreißfestigkeit zu realisieren, ist die Bruchdehnung der Barrierefolie 4 in Reckrichtung kleiner oder gleich 180%, bevorzugterweise kleiner 130%. Beim einer bidirektional gereckten Barrierefolie 4 somit in beiden Reckrichtungen. Durch das biaxiale Recken der Barrierefolie 4 kann die Anisotropie bezüglich der Durchreißfestigkeit in den beiden Reckrichtungen so gering wie möglich gehalten werden. Das ermöglicht Reißeigenschaften des erfindungsgemäßen Laminats wie in Fig. 5a dargestellt.

Im Falle einer zusätzlichen Barriereschicht 5 und/oder Schutzlackschicht sollte die Bruchdehnung der Barrierefolie 4 mit der zusätzlichen Barriereschicht 5 und/oder Schutzlackschicht nicht höher als 180% sein. Sehr zähe Materialien für die Barriereschicht 5 und/oder Schutzlackschicht können für die Anwendung somit ungünstig sein.

Es folgt ein Vergleich eines erfindungsgemäßen Verpackungslaminats 1 mit einem Verpackungslaminataus dem Stand der Technik.

Beim erfindungsgemäßen Verpackungslaminats 1 handelt es sich um ein 70 g/m² Papier als Trägerschicht 2, welches mittels eines Kaschierklebers mit einer 4,5 µm dicken PET Folie, als Barrierefolie 4, kaschiert wurde. Der Kaschierkleber wurde mit einem Flächengewicht von 1,5 g/m² aufgetragen. Fig. 5a zeigt die Spannungs-Dehnungsdiagramme des erfindungsgemäßen Verpackungslaminats 1. Die verwendete PET Folie des erfindungsgemäßen Verpackungslaminats 1 weist eine Bruchdehnung von 95 % in MD und 85 % in TD auf und wird in diesen Dicken üblicherweise in technischen Anwendungen als Kondensatorfolie eingesetzt.

Beim Vergleichsbeispiel handelt es sich um ein 42 g/m² Papier, als Trägerschicht 2 kaschiert gegen eine 12 µm PET-Folie, welche typisch für Verpackungsanwendungen aller Art ist. Fig. 5b zeigt die Spannungs-Dehnungsdiagramme des Vergleichsbeispiels. Die PET Folie (PETLAIN von Superfilm) hat eine Bruchdehnung von 140% in MD und 110 % in TD. Die Barrierefolie 4 liegt somit zwar innerhalb des erfindungsgemäßen Bruchdehnungsbereichs, allerdings außerhalb des Dickenbereichs. Das kann Probleme beim Reißen einer Verpackung aus einem solchen nicht erfindungsgemäßen Verpackungslaminat (beispielsweise beim Auspacken von Verpackungsgut) verursachen, da die Kunststofffolie in der Barrierefolie 4 ein einfaches Weiterreißen aufgrund ihrer hohen Dicke verhindert. Das kann problematisch beim Öffnen einer Verpackung sein. Weiters kann es dadurch für den Konsumenten direkt ersichtlich sein, dass Kunststoff in einer Verpackung vorhanden ist, was oftmals vermieden werden soll.

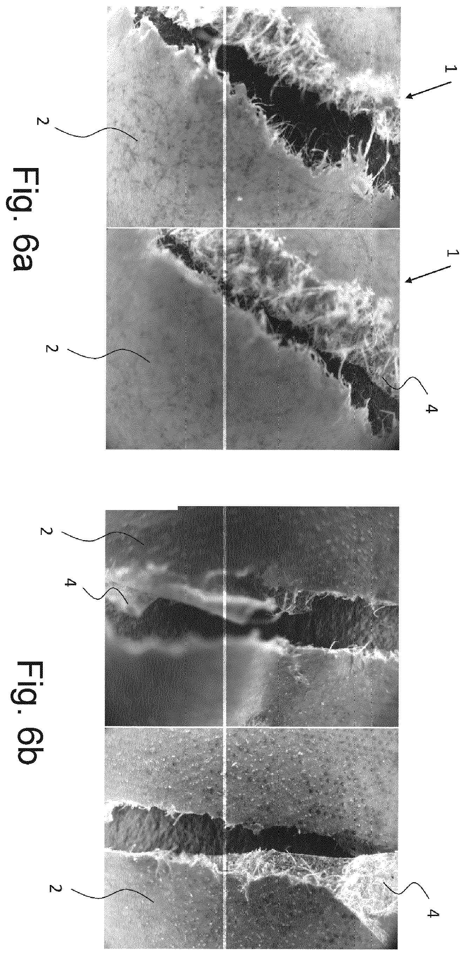

Das Reißverhalten lässt sich auch im Spannungs-Dehnungs-Diagramm in Fig. 5a gut ablesen. Das erfindungsgemäße Verpackungslaminat 1 reißt bei ca. 4% MD und ca. 6% TD. Beim Vergleichsbeispiel (Fig.5b) ist der Papierriss bei ähnlichen Streckgrenzen vorhanden, anschließend wird danach nur der PET-Film der Barrierefolie 4 gedehnt, was im plastischen Verformungsbereich des Spannungs-Dehnungsdiagramms ersichtlich ist, und sich nach dem Reißen auch in einer sichtbaren Barrierefolie 4 bemerkbar macht (Fig.6b). Papier allein, mit der beispielhaften Grammatur von 70 g/m², hat eine Bruchdehnung von MD 2,8%, TD 4,5%.

Rissbilder des erfindungsgemäßen Verpackungslaminats 1 sind in Fig. 6a dargestellt. Vergleicht man die Spannungs-Dehnungs-Diagramme nun mit den dazugehörigen Rissbildern (Fig.6a) des erfindungsgemäßen Verpackungslaminats 1, so ist im Rissbild kein separater Kunststoffrest der Barrierefolie 4 zu erkennen. Das stimmt mit dem Spannungs-Dehnungs-Diagramm überein, wo auch nur ein Rissbereich erkennbar ist, da der Kunststoff der Barrierefolie 4 sich an das Rissverhalten des Papiers der Trägerschicht 2 anpasst. Der Kunststoff der Barrierefolie 4 geht nicht in Dehnung über und wird somit vom Konsumenten beim Aufreißen der Verpackung als nicht störend empfunden und kann auch nicht als solcher wahrgenommen werden. Demgegenüber ist im Rissbildes des Stands der Technik (Fig.6b) die Kunststofffolie der Barrierefolie 4 deutlich unterhalb des Papiers der Trägerschicht 2 ersichtlich. Die Verbindungsschicht 3 ist in beiden Fällen aufgrund der relativ dünnen Schichtdicken im Rissbild nicht erkennbar.

In einer bevorzugten Ausführungsform kann das Verpackungslaminat 1 in Form einer Verschlussplatine über die Barrierefolie 4 an einen Verpackungscontainer 7 gesiegelt werden, um eine Verpackung 9 zu erzeugen. Dafür ist es nötig, dass die Barrierefolie 4 in Richtung Füllgut 6 orientiert ist. Die Verpackung 9 ist in Fig. 3 gezeigt. Die Verschlussplatine wird dazu aus dem erfindungsgemäßen Verpackungslaminat 1 ausgestanzt und auf einen Siegelrand 8 des Verpackungscontainers 7 in einem Heißsiegelverfahren aufgesiegelt. Das Siegeln erfolgt bevorzugterweise an einen Siegelrand 8 eines Verpackungscontainers 7, wodurch eine dichte Verbindung zwischen Verpackungscontainer 7 und Verpackungslaminat 1 erzielt wird. Die Siegeltemperatur kann bei herkömmlichen Siegelschichten 8 beispielsweise zwischen 120 C° und 290 C°, meist zwischen 180 °C und 250 °C liegen, jedoch ist auf die Hitzebeständigkeit der verwendeten Trägerschicht 2 zu achten.

Die Verpackung 9 kann beispielsweise für fetthaltige Lebensmittel gedacht sein, welche in portionsfertiger Form abgepackt sind. In einer bevorzugten Ausführungsform sind solche Verpackungen 9 für Portionen Butter, Haselnusscreme aber auch für Marmelade oder Honig geeignet. Selbst flüssiges Füllgut ist aufgrund der hohen Dichtigkeit gegenüber Flüssigkeiten denkbar. Natürlich können auch größere Lebensmittelmengen mit erfindungsgemäßen Verpackungslaminat 1 verpackt werden. Dazu muss kein Siegeln notwendig sein, wie in Fig.3 gegeben. Solche Verpackungen 9 können beispielsweise aus einem Ausschnitt des Verpackungslaminats 1 gefaltet und über einen, vorzugsweise drucksensitiven, Kleber fixiert werden. Das Verpackungslaminat 1 kann beispielsweise für Saisonware oder fetthaltige Lebensmittel wie Butter, Käse etc. eingesetzt werden. Dazu kann die Trägerschicht 2 aus Papier entweder in Richtung Füllgut oder auch in Richtung Umgebung angeordnet sein.

Das erfindungsgemäße Verpackungslaminat 1 kann auch zur Herstellung einer Verpackung in Form eines Beutels verwendet werden. Dazu kann das Verpackungslaminat 1 zugeschnitten und beispielsweise zum Beutel 11 geformt werden, beispielsweise durch Falten, und an Überlappungen gesiegelt werden, wie in Fig.4 am Beispiel eine Beutels 11 mit einer Längssiegelung 12 und zwei Quersiegelungen 13 dargestellt. Das Verpackungslaminat 1 kann aber auch direkt in bekannten kontinuierlichen Verpackungsmaschinen, z.B. sogenannte Form-Füllmaschinen oder Schlauchbeutelmaschinen, verarbeitet werden. Zum Siegeln wird das gefaltete, überlappende Verpackungslaminat 1 bekanntermaßen an der Siegelstelle zwischen zwei temperierten Siegelbacken zusammengepresst. In allen Fällen wird an der Siegelschicht des Verpackungslaminats 1, die von der Barrierefolie 4 gebildet wird, gesiegelt, entweder gegen die eigene Siegelschicht oder gegen die Trägerschicht 2.

Die Trägerschicht 2 oder das gesamte Verpackungslaminat 1 können eine Prägung aufweisen. Eine Musterprägung kann als Würmchenprägung, Leinenprägung, Linienprägung, Wellenprägung, Rasterprägung, Pünktchenprägung, Nadelprägung, Damastprägung, Bildprägung, Schriftzugprägung, Braille Prägung oder Kombinationen davon ausgeführt sein. Somit können einerseits günstige und bereits vorhandene Prägekalander, anderseits spezifisch für das jeweilige Produkt hergestellte Prägekalander verwendet werden, wobei die Musterprägung dem Produkt in jedem Fall eine gefällige Erscheinungsform verleiht.

## Patentansprüche

1. Verpackungslaminat (1) bestehend aus einer Trägerschicht (2) und einer Barrierefolie (4), wobei die Trägerschicht (2) aus Papier mit einer Grammatur von 40 bis 120 g/m² besteht, wobei die Barrierefolie (4) über eine Verbindungsschicht (3) mit der Trägerschicht (2) verbunden ist, wobei eine in zumindest eine Reckrichtung gereckte Kunststofffolie als Barrierefolie (4) vorgesehen ist, wobei die Barrierefolie (4) eine Schichtdicke von 1 bis 10 µm, bevorzugt kleiner 5 µm und höchst bevorzugt kleiner 3 µm aufweist, und wobei eine Bruchdehnung der Barrierefolie (4) in der zumindest einen Reckrichtung kleiner oder gleich 180 %, bevorzugt kleiner oder gleich 130% beträgt, wobei die Bruchdehnung über einen Zugversuch gemäß der Norm ASTM D882-12 bestimmbar ist.

2. Verpackungslaminat (1) nach Anspruch 1, **dadurch gekennzeichnet, dass** die Barrierefolie (4) biaxial in eine erste Reckrichtung und in eine zweite Reckrichtung gereckt ist.

3. Verpackungslaminat (1) nach Anspruch 2, **dadurch gekennzeichnet, dass** eine Bruchdehnung der Barrierefolie (4) in der ersten Reckrichtung kleiner oder gleich 180 %, bevorzugt kleiner oder gleich 130% beträgt, wobei die Bruchdehnung über einen Zugversuch gemäß der Norm ASTM D882-12 bestimmbar ist, **und dass** eine Bruchdehnung der Barrierefolie (4) in der zweiten Reckrichtung kleiner oder gleich 180 %, bevorzugt kleiner oder gleich 130% beträgt, wobei die Bruchdehnung über einen Zugversuch gemäß der Norm ASTM D882-12 bestimmbar ist.

4. Verpackungslaminat (1) nach Anspruch 1, **dadurch gekennzeichnet, dass** die Barrierefolie (4) aus Polypropylen Homopolymer, Polyethylen, EVOH Copolymeren oder Polyethylenterephthalat besteht.

5. Verpackungslaminat (1) nach Anspruch 1, **dadurch gekennzeichnet, dass** die Barrierefolie (4) eine Barriereschicht (5) aufweist, wobei die Barriereschicht (5) eine Schichtdicke von 0,01 bis 1 µm aufweist und wobei die Bruchdehnung der Barrierefolie (4) mit der Barriereschicht (5) nicht höher ist als 180%.

6. Verpackungslaminat (1) nach Anspruch 5, **dadurch gekennzeichnet, dass** die Barriereschicht (5) aus AlOₓ, SiOₓ oder einer Metallisierung, vorzugsweise aus Aluminium, besteht.

7. Verpackungslaminat (1) nach Anspruch 5, **dadurch gekennzeichnet, dass** die Barriereschicht (5) aus EVOH Copolymeren oder Polyamid besteht.

8. Verpackungslaminat (1) nach Anspruch 1, **dadurch gekennzeichnet, dass** die Trägerschicht (2) aus ungestrichenem Papier besteht.

9. Verpackungslaminat (1) nach Anspruch 8, **dadurch gekennzeichnet, dass** die Trägerschicht (2) eine Trägerbarrierebeschichtung aufweist.

10. Verpackung (9) mit Verpackungscontainer (7), **dadurch gekennzeichnet, dass** eine Verschlussplatine aus dem Verpackungslaminat (1) nach Ansprüchen 1 bis 9 an einem Siegelrand (8) des Verpackungscontainers gesiegelt ist.

11. Verpackung (9) in Form eines Beutels (10), **dadurch gekennzeichnet, dass** ein Verpackungslaminat (1) nach Ansprüchen 1 bis 9 gefaltet ist und nach dem Falten an Überlappungen gesiegelt ist.

12. Verfahren zur Herstellung eines Verpackungslaminats (1), wobei eine in zumindest eine Reckrichtung gereckte Barrierefolie (4) mit einer Schichtdicke von 1 - 10 µm, bevorzugterweise kleiner 5 µm und höchst bevorzugterweise kleiner 3 µm und mit einer Bruchdehnung in Reckrichtung von kleiner oder gleich 180% bereitgestellt wird, bevorzugterweise kleiner oder gleich 130%, und eine Trägerschicht (2) aus Papier mit einer Grammatur von 40 bis 120 g/m² bereitgestellt wird, und eine Verbindungsschicht (3) auf die Barrierefolie (4) und/oder auf die Trägerschicht (2) aufgebracht wird und die Barrierefolie (4) und die Trägerschicht (2) über die Verbindungsschicht (3) miteinander verbunden werden, wobei die Bruchdehnung über einen Zugversuch gemäß der Norm ASTM D882-12 bestimmt wird.

## Claims

1. A packaging laminate (1) consisting of a carrier layer (2) and a barrier film (4), wherein the carrier layer (2) consists of paper with a grammage of 40 to 120 g/m², wherein the barrier film (4) is connected to the carrier layer (2) via a connecting layer (3), wherein a plastics film stretched in at least one stretching direction is provided as the barrier film (4), wherein the barrier film (4) has a layer thickness of 1 to 10 µm, preferably less than 5 µm and very preferably less than 3 µm, and wherein an elongation at break of the barrier film (4) in the at least one stretching direction is less than or equal to 180%, preferably less than or equal to 130%, which elongation at break can be determined via a tensile test according to the ASTM D882-12 standard.

2. The packaging laminate (1) according to claim 1, **characterized in that** the barrier film (4) is stretched biaxially in a first stretching direction and in a second stretching direction.

3. The packaging laminate (1) according to claim 2, **characterized in that** an elongation at break of the barrier film (4) in the first stretching direction is less than or equal to 180%, preferably less than or equal to 130%, which elongation at break can be determined via a tensile test according to the ASTM D882-12 standard, **and in that** an elongation at break of the barrier film (4) in the second stretching direction is less than or equal to 180%, preferably less than or equal to 130%, which elongation at break can be determined via a tensile test according to the ASTM D882-12 standard.

4. The packaging laminate (1) according to claim 1, **characterized in that** the barrier film (4) consists of polypropylene homopolymer, polyethylene, EVOH copolymers or polyethylene terephthalate.

5. The packaging laminate (1) according to claim 1, **characterized in that** the barrier film (4) has a barrier layer (5), which barrier layer (5) has a layer thickness of 0.01 to 1 µm and wherein the elongation at break of the barrier film (4) with the barrier layer (5) is not higher than 180%.

6. The packaging laminate (1) according to claim 5, **characterized in that** the barrier layer (5) consists of AlOₓ, SiOₓ or a metallization, preferably of aluminum.

7. The packaging laminate (1) according to claim 5, **characterized in that** the barrier layer (5) consists of EVOH copolymers or polyamide.

8. The packaging laminate (1) according to claim 1, **characterized in that** the carrier layer (2) consists of uncoated paper.

9. The packaging laminate (1) according to claim 8, **characterized in that** the carrier layer (2) has a carrier barrier coating.

10. A packaging (9) having a packaging container (7), **characterized in that** a closure panel made of the packaging laminate (1) according to claims 1 to 9 is sealed to a sealing edge (8) of the packaging container.

11. A packaging (9) in the form of a bag (10), **characterized in that** a packaging laminate (1) according to claims 1 to 9 is folded and sealed at overlapping points after folding.

12. A method for producing a packaging laminate (1), wherein a barrier film (4) stretched in at least one stretching direction is provided with a layer thickness of 1 - 10 µm, preferably less than 5 µm and most preferably less than 3 µm, and with an elongation at break in stretching direction of less than or equal to 180%, preferably less than or equal to 130%, and a carrier layer (2) of paper with a grammage of 40 to 120 g/m² is provided, and a connecting layer (3) is applied to the barrier film (4) and/or to the carrier layer (2), and the barrier film (4) and the carrier layer (2) are connected to one another via the connecting layer (3), wherein the elongation at break can be determined via a tensile test according to the ASTM D882-12 standard.

## Revendications

1. Stratifié d'emballage (1) constitué d'une couche de support (2) et d'un film barrière (4), dans lequel la couche de support (2) est constituée de papier comportant un grammage de 40 à 120 g/m², dans lequel le film barrière (4) est relié à la couche de support (2) par l'intermédiaire d'une couche de liaison (3), dans lequel un film plastique étiré dans au moins une direction d'étirage est prévu en guise de film barrière (4), dans lequel le film barrière (4) présente une épaisseur de couche de 1 à 10 µm, de préférence inférieure à 5 µm et de manière hautement préférée inférieure à 3 µm, et dans lequel un allongement à la rupture du film barrière (4) dans l'au moins une direction d'étirage est inférieur ou égal à 180 %, de préférence inférieur ou égal à 130 %, dans lequel l'allongement à la rupture peut être déterminé par l'intermédiaire d'un essai de traction selon la norme ASTM D882-12.

2. Stratifié d'emballage (1) selon la revendication 1, **caractérisé en ce que** le film barrière (4) est étiré biaxialement dans une première direction d'étirage et dans une seconde direction d'étirage.

3. Stratifié d'emballage (1) selon la revendication 2, **caractérisé en ce qu'**un allongement à la rupture du film barrière (4) dans la première direction d'étirage est inférieur ou égal à 180 %, de préférence inférieur ou égal à 130 %, dans lequel l'allongement à la rupture peut être déterminé par l'intermédiaire d'un essai de traction selon la norme ASTM D882-12, et **en ce qu'**un allongement à la rupture du film barrière (4) dans la seconde direction d'étirage est inférieur ou égal à 180 %, de préférence inférieur ou égal à 130 %, dans lequel l'allongement à la rupture peut être déterminé par l'intermédiaire d'un essai de traction selon la norme ASTM D882-12.

4. Stratifié d'emballage (1) selon la revendication 1, **caractérisé en ce que** le film barrière (4) est constitué d'un homopolymère de polypropylène, de polyéthylène, de copolymères EVOH ou de polyéthylène téréphtalate.

5. Stratifié d'emballage (1) selon la revendication 1, **caractérisé en ce que** le film barrière (4) présente une couche barrière (5), dans lequel la couche barrière (5) présente une épaisseur de couche de 0,01 à 1 µm et dans lequel l'allongement à la rupture du film barrière (4) avec la couche barrière (5) n'est pas supérieur à 180 %.

6. Stratifié d'emballage (1) selon la revendication 5, **caractérisé en ce que** la couche barrière (5) est constituée d'AlOₓ, de SiOₓ ou d'une métallisation, de préférence d'aluminium.

7. Stratifié d'emballage (1) selon la revendication 5, **caractérisé en ce que** la couche barrière (5) est constituée de copolymères EVOH ou de polyamide.

8. Stratifié d'emballage (1) selon la revendication 1, **caractérisé en ce que** la couche de support (2) est constituée de papier non couché.

9. Stratifié d'emballage (1) selon la revendication 8, **caractérisé en ce que** la couche de support (2) présente un revêtement barrière de support.

10. Emballage (9) comportant un conteneur d'emballage (7), **caractérisé en ce qu'**une plaque de fermeture en stratifié d'emballage (1) selon les revendications 1 à 9 est scellée sur un bord de scellement (8) du conteneur d'emballage.

11. Emballage (9) sous la forme d'un sac (10), **caractérisé en ce qu'**un stratifié d'emballage (1) selon les revendications 1 à 9 est plié et est scellé au niveau de chevauchements après le pliage.

12. Procédé de fabrication d'un stratifié d'emballage (1), dans lequel un film barrière (4) étiré dans au moins une direction d'étirage comportant une épaisseur de couche de 1 à 10 µm, de préférence inférieure à 5 µm et, de manière hautement préférée, inférieure à 3 µm et comportant un allongement à la rupture dans la direction d'étirage inférieur ou égal à 180 %, de préférence inférieur ou égal à 130 % est fourni, et une couche de support (2) en papier comportant un grammage de 40 à 120 g/m² est fourni, et une couche de liaison (3) est appliquée sur le film barrière (4) et/ou sur la couche de support (2) et le film barrière (4) et la couche de support (2) sont reliés l'un à l'autre par l'intermédiaire de la couche de liaison (3), dans lequel l'allongement à la rupture est déterminé par l'intermédiaire d'un essai de traction selon la norme ASTM D882-12.
